# FASCICULE DE BREVET EUROPEEN

(11) **EP 4 011 777 B1**
(45) Date de publication et mention de la délivrance du brevet: **25.06.2025**
(21) Numéro de dépôt: 21212092.7
(22) Date de dépôt: 02.12.2021
(51) Int. Cl.: B64D 13/06, B64D 15/04

(54) **SYSTEME D'ALIMENTATION PNEUMATIQUE DISTRIBUÉ D'UN AERONEF**
VERTEILTES PNEUMATISCHES VERSORGUNGSSYSTEM EINES LUFTFAHRZEUGS
DISTRIBUTED PNEUMATIC POWER SUPPLY SYSTEM FOR AN AIRCRAFT

(30) Priorité: 11.12.2020 FR 2013070
(43) Date de publication de la demande: 15.06.2022
(73) Titulaire: Liebherr-Aerospace Toulouse SAS, 31200 Toulouse (FR)
(72) Inventeur: BALOCCHI, Vincent, 31016 TOULOUSE Cedex 2 (FR)
(74) Mandataire: Bringer IP

(56) Documents cités:
- EP-A1- 3 323 728
- EP-A1- 3 584 165
- EP-A2- 2 543 595
- CN-A- 110 510 124
- US-A1- 2016 375 987
- US-A1- 2017 233 081
- US-A1- 2017 268 423
- AIRBUS: "A350-900: Flight Deck and Systems Briefing for Pilots", 30 September 2011 (2011-09-30), XP055523362, Retrieved from the Internet <URL:http://www.smartcockpit.com/docs/a350-900-flight-deck-and-systems-briefing-for-pilots.pdf> [retrieved on 20181113]

## Description

### Domaine technique de l'invention

L'invention concerne un système d'air d'un aéronef comprenant une pluralité de sources d'air et une pluralité de consommateurs d'air.

### Arrière-plan technologique

Des systèmes pneumatiques sont embarqués sur les avions commerciaux pour réaliser des fonctions de pressurisation cabine, de conditionnement d'air, de dégivrage, d'inertage etc., nécessaires pour la sécurité du vol et le confort des personnes.

La gestion d'air à bord d'un aéronef est donc cruciale, à la fois d'un point de vue de l'efficacité énergétique de l'aéronef que d'un point de vue de la sécurité des passagers et de l'équipage.

Un système d'air (aussi désigné par la terminologue de système pneumatique) d'un aéronef est configuré pour permettre l'alimentation d'une pluralité de consommateurs pneumatiques en air issu d'une pluralité de sources d'air.

La plupart des systèmes d'air d'aéronefs comprennent ainsi une pluralité de sources d'air telles que des dispositifs de prélèvement d'air sur les moteurs propulsifs de l'aéronef ; des groupes auxiliaires de puissance, plus connus sous l'acronyme APU pour « *Auxiliary Power Unit* » ; des écopes de prélèvement extérieur, plus connues sous la dénomination anglaise de « *scoop inlet* », éventuellement associées à des compresseurs électriques ; etc. et une pluralité de consommateurs d'air, tels que des packs de conditionnements d'air destinés à fournir un air à température et pression contrôlées dans la cabine de l'aéronef ; des dispositifs de dégivrage des ailes, plus connus sous l'acronyme anglais WAIS pour « *Wing Anti-Icing System* » ; des dispositifs d'inertage des réservoirs, etc.

Par ailleurs, l'introduction de dispositifs de contrôle actif d'écoulement, désignés ci-après par les termes de dispositifs AFC (pour l'acronyme anglais *Active Flow Control*) sur les ailes de l'aéronef, les volets, la dérive et de manière générale sur toute surface aérodynamique de l'aéronef permet d'améliorer le comportement aérodynamique de ce dernier. Le principe consiste à souffler (ou aspirer) localement de l'air au travers d'un dispositif AFC pour améliorer les propriétés de l'écoulement.

Cela permet d'améliorer les performances des surfaces de contrôle de l'aéronef, c'est-à-dire d'améliorer la portance ou de diminuer la trainée de l'aéronef avec une réduction de la consommation de carburant.

A titre d'exemple, certaines études estiment que l'utilisation de dispositifs AFC sur les ailes et sur la dérive permettent de diminuer de 9% la consommation énergétique de l'aéronef.

D'une manière générale, l'alimentation de nouveaux consommateurs d'air montés sur un aéronef (dispositifs AFC ou autres consommateurs d'air additionnels) est possible à partir des sources pneumatiques existantes sur l'aéronef par exemple l'air prélevé sur les moteurs principaux, plus connu sous la dénomination « *d'air bleed* » ou à partir de compresseurs électriques dédiés alimentés par un air prélevé à l'extérieur de l'aéronef, moyennant des modifications des équipements correspondants. Dans le cas de prélèvement d'un air bleed, il serait aujourd'hui nécessaire d'augmenter la puissance et la taille du dispositif de prélèvement pour que la consommation des nouveaux consommateurs comme les dispositifs AFC ne réduise pas l'alimentation en air des autres consommateurs d'air du système d'air et notamment du système de conditionnement d'air de l'aéronef.

Par exemple, dans le cas d'un avion bimoteur classique, la perte du prélèvement d'air sur un moteur pour cause de panne ou arrêt du moteur doit être compensée par le moteur restant. Aussi, chaque dispositif de prélèvement d'air moteur est dimensionné pour pouvoir subvenir à lui seul à l'ensemble des besoins en air de l'aéronef. Dans le cas où l'on souhaite équiper cet avion bimoteur de nouveaux consommateurs d'air tels que des dispositifs AFC, il faut alors augmenter sensiblement la taille du système de prélèvement dans la nacelle et sur le moteur pour pouvoir fournir le débit d'air nécessaire à chaque système.

Or, il a été démontré que quelle que soit l'option retenue pour alimenter les dispositifs AFC, les bénéfices qu'ils apportent sont en partie annulés par l'augmentation de la masse et/ou de la complexité du système d'air nécessaire pour fournir le débit d'air à l'ensemble des consommateurs d'air (augmentation du dispositif de prélèvement d'air ou ajout d'une nouvelle source pneumatique, tel qu'un compresseur électrique dédié).

Les inventeurs ont donc cherché à améliorer l'architecture des systèmes d'air existants pour permettre l'alimentation d'autres consommateurs (tels que des dispositifs AFC, mais pas uniquement) sans néanmoins impacter l'encombrement et/ou la complexité du système d'air. En d'autres termes, les inventeurs ont cherché à développer un système d'air d'un aéronef qui puisse alimenter des nouveaux consommateurs d'air sans nécessiter de surdimensionner les sources d'air d'un aéronef qui en serait dépourvu.

Le document EP3584165 A1, selon son abstract divulgue un système d'air sous pression comprenant un compresseur ayant une entrée et une sortie de compresseur. L'entrée du compresseur reçoit de l'air d'une première source d'air et la sortie du compresseur fournit de l'air sous pression à un système de contrôle environnemental (ECS) . Le système d'air sous pression comprend une turbine avec une entrée de turbine pour recevoir l'air d'une deuxième source d'air, un premier embrayage à roue libre couplé de manière opérationnelle entre un arbre de sortie d'un boîtier d'accessoires et le compresseur, le boîtier d'accessoires couplé de manière opérationnelle à un arbre d'entraînement s'étendant à partir d'un moteur de l'aéronef, et un deuxième embrayage à roue libre couplé de manière opérationnelle entre le compresseur et la turbine. Les premier et second embrayages à roue libre permettent au boîtier d'accessoires d'entraîner le compresseur pendant un premier mode de fonctionnement et à la turbine d'entraîner le compresseur pendant un second mode de fonctionnement.

Le document US 2017/233081 A1 selon son abstract divulgue une méthode et un aéronef pour fournir de l'air de purge aux systèmes de contrôle environnemental d'un aéronef utilisant un moteur à turbine à gaz, y compris la détermination d'une demande d'air de purge pour les systèmes de contrôle environnemental, l'approvisionnement en air de purge à basse pression et à haute pression aux systèmes de contrôle environnemental, dans lequel l'approvisionnement proportionnel est contrôlé de sorte que le flux d'air conditionné réponde à la demande d'air de purge déterminée.

### Objectifs de l'invention

L'invention vise à fournir un système d'air d'un aéronef comprenant une pluralité de sources d'air et une pluralité de consommateurs d'air agencé sur l'aéronef qui pallie au moins en partie les inconvénients des systèmes d'air connus.

L'invention vise en particulier à fournir, dans au moins un mode de réalisation, un tel système d'air qui permette l'ajout de nouveaux consommateurs d'air, tels que des dispositifs de contrôle actif d'écoulement et qui présente un encombrement et une complexité sensiblement identiques à un système d'air dénué de tels nouveaux consommateurs d'air.

L'invention vise aussi à fournir, dans au moins un mode de réalisation, un système d'air qui permet de minimiser la consommation d'air des dispositifs de contrôle actif d'écoulement.

L'invention vise aussi à fournir, dans au moins un mode de réalisation, un système d'air qui permet de pallier d'éventuelles pannes d'une ou plusieurs sources d'air tout en permettant l'alimentation d'au moins certains consommateurs d'air critiques.

L'invention vise aussi à fournir, dans au moins un mode de réalisation, un système d'air qui permet d'utiliser simultanément différentes sources d'air moteurs et un groupe auxiliaire de puissance.

L'invention vise aussi à fournir un procédé de gestion d'air au sein d'un aéronef.

### Exposé de l'invention

Pour ce faire, l'invention concerne un système d'air d'un aéronef comprenant :
- une pluralité de consommateurs d'air dont au moins un pack de conditionnement d'air destiné à alimenter une cabine de l'aéronef en air à température et pression contrôlées,
- une pluralité de sources d'air dont au moins un dispositif de prélèvement d'air sur un moteur propulsif de l'aéronef et au moins un groupe auxiliaire de puissance,
- un réseau de conduites et de vannes de régulation configurées pour pouvoir, sur commande d'une unité de commande et/ou des conditions de vol, assurer une liaison fluidique entre lesdites sources d'air et lesdits consommateurs d'air.

Le système selon l'invention est caractérisé en ce que :
- ledit réseau de conduites et de vannes associées comprend au moins une vanne, dite vanne d'isolation, agencée entre un dispositif de prélèvement d'air et une conduite d'air reliant un pack de conditionnement d'air et ledit groupe auxiliaire de puissance,
- ladite unité de commande est configurée pour pouvoir déterminer, à partir des besoins en air de chaque consommateur d'air et des sources d'air disponibles, une configuration des vannes de régulation, dite configuration idéale, qui permet d'alimenter en air chaque consommateur d'air suivant lesdits besoins identifiés, et une configuration, dite configuration dégradée, qui permet d'alimenter en air des consommateurs d'air prédéterminés à partir desdites sources d'air disponibles lorsque ladite configuration idéale n'est pas atteignable.

Un système d'air selon l'invention permet donc d'intégrer un nouveau consommateur d'air, tel que par exemple un dispositif AFC, au sein d'une architecture d'un système d'air en autorisant un mode dégradé de fonctionnement lorsque les besoins en air sont supérieurs aux sources d'air disponibles. En particulier, un système selon l'invention permet de combiner toutes les sources d'air classiques disponibles à bord d'un aéronef pour alimenter un consommateur pneumatique additionnel (ou alimenter un consommateur d'air déjà présent avec un débit supérieur) sans avoir à augmenter le débit maximum de prélèvement d'air d'un moteur d'un aéronef qui en serait dépourvu, ni celui du groupe auxiliaire de puissance.

En particulier, le système selon l'invention détermine les sources d'air disponibles et les besoins en air en fonction des conditions de vol de l'aéronef et peut donc basculer d'une source d'air à une autre ou d'un consommateur d'air à un autre en fonction de ces conditions de vol.

Par exemple, un groupe auxiliaire de puissance ne délivre plus d'air en général au-delà d'une certaine altitude. Un dispositif de dégivrage des ailes (aussi désigné dans la suite par « système WAIS ») n'est plus nécessaire au-delà d'une certaine altitude sur la plupart des aéronefs (31 000 pieds sur les airbus A320^{®}). De même, un dispositif AFC peut être activé sur certaines phases de vol par exemple au décollage et à l'atterrissage dans le cas où il faudrait améliorer les performances intrinsèques de la voilure durant ces phases, ou bien pendant la croisière dans le cas de la recherche de la réduction de la consommation.

Aussi, un bilan des sources d'air et des consommateurs d'air selon les conditions de vol permet d'optimiser les liaisons fluidiques entre les sources et les consommateurs pour déterminer la configuration idéale.

Dans le cas où cette configuration idéale n'est pas atteignable, le système selon l'invention permet d'établir une configuration dégradée dans laquelle des consommateurs prédéterminés (en particulier les plus critiques) sont alimentés par les sources d'air.

Pour ce faire, l'unité de commande est configurée pour déterminer les besoins en air de chaque consommateur d'air et les sources d'air disponibles en fonction des conditions de vol. Ces données de besoin en air et de disponibilités sont par exemple fournies par les calculateurs présents à bord de l'aéronef tels que le calculateur intégré du système d'air (plus connu sous l'acronyme IASC pour *Integrated Air System Controller*), le calculateur du système de gestion bleed (plus connu sous l'acronyme BMC pour *Bleed Management Controller*), et de manière générale de tout calculateur à bord de l'aéronef capable de fournir une donnée liée à un besoin ou à une source d'air.

La configuration dégradée vise à privilégier un ou plusieurs consommateurs d'air en fonction des sources d'air disponibles et en fonction des conditions de vol.

Par exemple, dans le cas d'un avion bimoteur, et en cas de panne de l'un des deux moteurs principaux, la source d'air associée à ce moteur principal n'est plus disponible, limitant ainsi les sources d'air disponible.

Dans le cas particulier où l'aéronef comprend un dispositif AFC qui forme un consommateur d'air du système d'air selon l'invention, dédié aux phases de décollage et d'atterrissage, et si l'aéronef se trouve dans une telle phase, l'alimentation en air de ce dispositif est prioritaire car une interruption affecterait instantanément les performances de l'aéronef dégradant la sécurité du vol, alors qu'une interruption de l'alimentation des autres systèmes tel que l'alimentation du système antigivrage des ailes ou le système de conditionnement d'air n'a pas d'effet immédiat et permet au pilote de reconfigurer les systèmes d'air ou le vol pour poursuivre le vol en sécurité. L'unité de commande peut ainsi établir une configuration dégradée qui vise à maintenir l'alimentation sans interruption du dispositif le plus critique au détriment des autres consommateurs sans remettre en cause la sécurité du vol.

Les configurations dégradées dépendent donc des sources d'air disponibles et des conditions de vol, permettant de privilégier certains consommateurs au détriment d'autres consommateurs moins prioritaires.

Selon l'invention, le réseau comprend en outre au moins une vanne d'isolation, agencée entre un dispositif de prélèvement d'air et une conduite d'air reliant un pack de conditionnement d'air et ledit groupe auxiliaire de puissance.

Ainsi, ce pack de conditionnement d'air peut être alimenté en air directement par le groupe auxiliaire de puissance (en séparant fluidiquement cette conduite d'air du dispositif de prélèvement d'air), y compris lorsque ce dispositif de prélèvement d'air alimente d'autres consommateurs d'air. En particulier, en cas de panne de l'un des dispositifs de prélèvement d'air sur un aéronef bimoteur, le système selon cette variante permet l'alimentation d'un pack ECS par le groupe auxiliaire de puissance et l'alimentation des autres consommateurs d'air (par exemple, les dispositifs AFC et WAIS) par les autres sources d'air disponibles. Un système selon l'invention permet donc d'alimenter simultanément les différents consommateurs d'air de l'aéronef sans néanmoins nécessiter le surdimensionnement des sources d'air.

Un système d'air selon l'invention peut donc comprendre tous types de sources d'air et tous types de consommateurs d'air.

Selon une variante avantageuse de l'invention, ladite pluralité de consommateurs d'air comprend au moins un dispositif de contrôle actif d'écoulement (dispositif AFC) monté sur l'aéronef pour améliorer le comportement aérodynamique de l'aéronef et agencé en aval d'une vanne de régulation pilotée par ladite unité de commande.

Avantageusement et selon cette variante de l'invention, les dispositifs AFC et leur vanne d'alimentation, dite vanne AFCV, sont agencés immédiatement en aval d'un dispositif de prélèvement d'air de manière à pouvoir être alimentés par un air chaud à température contrôlée issu directement de ce dispositif de prélèvement d'air.

Cela permet d'alimenter le dispositif AFC avec un air chaud à température contrôlée, de l'ordre de 200°C, ce qui permet d'en diminuer le besoin massique d'air. En particulier, il a été démontré que le besoin en débit massique d'air d'un dispositif AFC est inversement proportionnel à la température d'air qui l'alimente. Ainsi, un système d'air selon cette variante de l'invention permet d'optimiser le débit d'air nécessaire au dispositif AFC sans néanmoins nécessiter le recours à un système de réchauffage de l'air. Le dispositif AFC bénéficie du contrôle en température en sortie du dispositif de prélèvement d'air sur les moteurs propulsifs de l'aéronef (autour de 200°C sur les avions commerciaux classiques) de par son agencement immédiatement en aval du dispositif de prélèvement d'air.

Avantageusement et selon l'invention, le système comprend en outre des moyens de surveillance de l'alimentation en air de chaque dispositif de control actif d'écoulement d'air.

Cette variante avantageuse permet de vérifier la bonne alimentation en air des dispositifs AFC du système d'air. Ces moyens de surveillance sont par exemple formés par un ou plusieurs capteurs agencés en aval de la vanne de régulation de ce dispositif AFC ou directement par la vanne de régulation de ce dispositif.

Avantageusement et selon l'invention, le système comprend deux dispositifs de prélèvement d'air agencés respectivement sur deux moteurs propulsifs distincts agencés sur chaque aile de l'aéronef et une vanne, dite vanne d'interconnexion, agencée fluidiquement entre les deux dispositifs de prélèvement d'air de manière à permettre à un seul des deux dispositifs de prélèvement d'air d'alimenter les deux côtés de l'aéronef en cas de panne de l'autre dispositif de prélèvement d'air.

Un système selon cette variante permet ainsi de pallier les défaillances d'un dispositif de prélèvement d'air d'un moteur propulsif sur un aéronef bimoteur en permettant d'assurer une liaison fluidique entre les côtés de l'aéronef pour que le dispositif de prélèvement d'air en fonctionnement puisse alimenter les consommateurs d'air alimentés (en l'absence de panne) par la source d'air formée par le dispositif de prélèvement d'air défaillant (ou du dispositif de prélèvement d'air associé à un moteur défaillant). La vanne d'interconnexion (aussi désignée par l'acronyme XFV) est configurée pour mettre en communication de fluide les deux sous-systèmes du système d'air.

Avantageusement et selon l'invention, au moins un dispositif AFC est agencé sur chaque aile de l'aéronef et ladite unité de commande est configurée pour alimenter ce dispositif AFC en air uniquement pendant les phases de décollage et d'atterrissage.

L'invention concerne également un procédé de gestion d'air au sein d'un aéronef comprenant au moins une pluralité de consommateurs d'air dont au moins un pack de conditionnement d'air et une pluralité de sources d'air dont au moins un dispositif de prélèvement d'air sur un moteur propulsif de l'aéronef et au moins un groupe auxiliaire de puissance, une unité de commande, un réseau de conduites et de vannes de régulation configuré pour permettre sur commande de ladite unité de commande de relier fluidiquement lesdites sources d'air auxdits consommateurs d'air, caractérisé en ce qu'il comprend les étapes consistant à :
- déterminer les besoins en air de chaque consommateur d'air et lesdites sources d'air disponibles,
- déterminer une configuration, dite configuration idéale, qui permet d'alimenter en air, sur commande desdites vannes de régulation, chaque consommateur d'air suivant lesdits besoins identifiés,
- déterminer une configuration, dite configuration dégradée, qui permet d'alimenter en air, sur commande desdites vannes de régulation, des consommateurs d'air prédéterminés à partir desdites sources d'air disponibles lorsque ladite configuration idéale n'est pas atteignable.

Un procédé de gestion d'air selon l'invention est avantageusement mis en œuvre dans un système de gestion d'air selon l'invention et un système d'air selon l'invention met avantageusement en œuvre un procédé selon l'invention.

La commande des vannes de régulation peut être réalisée, selon le type de vanne considérée, par l'unité de commande ou spontanément en fonction des variations des conditions de vol (par exemple dans le cas de vannes pneumatiques de régulation qui réagissent à des variations des conditions pneumatiques d'ouverture/fermeture).

Les avantages d'un système d'air selon l'invention s'appliquent *mutatis mutandis* à un procédé de gestion d'air selon l'invention.

L'invention concerne également un système d'air et un procédé de gestion d'air caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère à la figure annexée dans laquelle :

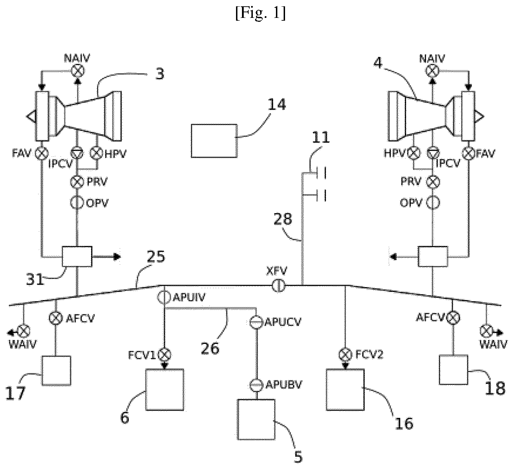

[Fig. 1] est une vue schématique d'un système d'air selon un mode de réalisation de l'invention.

### Description détaillée d'un mode de réalisation de l'invention

Sur la figure, les échelles et les proportions ne sont pas strictement respectées et ce, à des fins d'illustration et de clarté.

La figure 1 illustre un système d'air d'un aéronef bimoteur selon un mode de réalisation de l'invention.

Les deux moteurs propulsifs de l'aéronef sont référencés 3 et 4 sur la figure 1.

Le système d'air selon le mode de réalisation de la figure 1 est formé de deux sous-systèmes qui s'étendent respectivement et globalement sur l'aile droite et l'aile gauche de l'aéronef. Aussi et dans toute la suite, seul le sous-système d'air en lien avec le moteur propulsif 3 est décrit, étant entendu que l'autre sous-système d'air en lien avec le moteur propulsif 4 présente une architecture et un fonctionnement sensiblement identiques à quelques détails près qui seront précisés ultérieurement.

Par ailleurs, les différentes conduites du système d'air ne sont pas systématiquement référencées à des fins de clarté. Seules les conduites spécifiques qui ne découlent pas à l'évidence de la présente description sont référencées sur la figure 1.

Le système d'air selon l'invention comprend une unité de commande 14 configurée pour piloter au moins certaines des vannes de régulation du système d'air. Les liaisons de commande entre l'unité de commande 14 et les différentes vannes de régulation pilotées par cette dernière ne sont pas représentées sur la figure 1 à des fins de clarté. L'homme du métier comprendra aisément que cette unité de commande est reliée, directement ou indirectement à chacune des vannes de régulation pour piloter les ouvertures et fermetures de vannes en fonction des configurations visées. Les logiques de commande de ces vannes en fonction des configurations visées sont décrites ultérieurement. De même, l'unité de commande est configurée pour déterminer le bilan des sources pneumatiques disponibles et des besoins en air des consommateurs d'air. Les liaisons permettant à l'unité de commande de récupérer les informations correspondantes ne sont pas représentées sur la figure 1 à des fins de clarté.

Le système d'air selon le mode de réalisation de la figure 1 comprend un dispositif de prélèvement d'air sur le moteur propulsif 3. Ce dispositif de prélèvement d'air est configuré pour prélever un air haute pression sur le moteur par une vanne haute pression, référencée HPV sur la figure 1, ou par un port à pression intermédiaire issu d'un clapet anti-retour, référencée IPCV sur la figure 1. Le débit prélevé sur le moteur passe dans une vanne de régulation de pression, référencée PRV sur la figure 1. Le flux d'air issu de cette vanne PRV passe ensuite dans une vanne protection à la surpression, référencée OPV sur la figure 1, puis par un échangeur de chaleur 31, plus connu sous la dénomination anglaise de *precooler.* Cet échangeur de chaleur 31 est destiné à refroidir l'air haute pression issu de la vanne OPV par un air issu de l'écoulement secondaire du moteur 3, plus connu sous la dénomination d'air FAN. Cet air FAN est contrôlé par une vanne de régulation, référencée FAV sur la figure 1.

L'air à température contrôlée autour de 200°C en sortie de la passe chaude du precooler 31 est destiné à alimenter les différents consommateurs de l'aéronef par le biais d'une conduite 25 qu'elle alimente. L'air en sortie de la passe froide du precooler est en général rejeté à l'extérieur de l'aéronef par l'intermédiaire d'une conduite 22.

Le système d'air selon l'invention comprend en outre un groupe auxiliaire de puissance 5 qui forme une source d'air du système. Ce groupe auxiliaire de puissance 5 est relié à un pack de conditionnement d'air 6 par le biais d'une conduite 26. La conduite 26 est munie d'un clapet anti-retour, référencée APUCV, d'une vanne de régulation, référencée APUBV sur la figure 1 et d'une vanne de régulation du pack de conditionnement d'air référencée FCV1 sur la figure 1.

Cet ensemble formé par la conduite 26, par les vannes FCV1, APUBV et par le clapet APUCV forme un circuit d'air qui peut être autonome par l'activation d'une vanne d'isolation, référencée APUIV, et configurée pour permettre d'isoler ce circuit de la conduite 25. Ainsi, le groupe auxiliaire de puissance 5 peut alimenter directement le pack de conditionnement d'air 6, y compris lorsque l'air issu du moteur propulsif 3 est déjà utilisé par d'autres consommateurs.

Le système d'air selon le mode de réalisation de la figure 1 comprend également deux dispositifs AFC 17, 18 agencés chacun en aval d'une vanne de régulation, référencée AFCV sur la figure 1. Le dispositif AFC 17 du sous-système décrit en lien avec le moteur 3 et sa vanne AFCV associée sont agencés directement en aval du precooler 31 de telle sorte que ce dispositif AFC 17 peut être alimenté sur commande de l'unité de commande par un air chaud en sortie du precooler.

Le système d'air comprend également un dispositif contre le givrage des ailes alimenté par une vanne de régulation référencée WAIV sur la figure 1.

Sur la figure 1, le système comprend également un dispositif contre le givrage de la nacelle alimenté en air par une vanne de régulation référencée NAIV sur la figure 1. Cette vanne est alimentée par un air à pression intermédiaire issu directement du moteur propulsif. Ce dispositif est donc un consommateur d'air du système d'air.

Comme indiqué précédemment, le système d'air est formé de deux sous-systèmes sensiblement identiques, à l'exception du moteur auxiliaire 5 qui n'est pas dupliqué sur les deux sous-systèmes, et d'une conduite 28 de liaison à un connecteur 11 destiné à recevoir au sol un équipement de fourniture d'air. Cet équipement est utilisé au sol pour alimenter le système d'air en air lorsque les moteurs propulsifs 3, 4 et le groupe auxiliaire de puissance 5 ne peuvent pas être utilisés. A ce titre, le deuxième sous-système comprend également un pack de conditionnement d'air 16 et une vanne de régulation du pack de conditionnement d'air référencée FCV2 sur la figure 1.

Les deux sous-systèmes (droite et gauche) du système d'air sont reliés l'un à l'autre par une vanne d'interconnexion référencée XFV sur la figure 1 de manière à ce que l'un des deux sous-systèmes puisse alimenter l'autre sous-système en cas de besoin (panne d'un moteur ou défaillance du dispositif de prélèvement d'air associé à l'un des moteurs). La vanne XFV est agencée fluidiquement entre les deux sous-systèmes du système d'air, c'est-à-dire qu'elle permet la mise en communication de fluide des deux sous-systèmes d'air et notamment l'alimentation d'un sous-système par le dispositif de prélèvement d'air de l'autre sous-système et inversement.

Le système d'air selon le mode de réalisation de la figure 1 permet d'obtenir l'ensemble des configurations précisées dans le tableau ci-dessous dans lequel la panne référencée M1 désigne une panne du moteur propulsif ou de son système de prélèvement d'air du premier sous-système référencé 3 sur la figure 1, et la panne référencée M2 désigne une panne du moteur propulsif ou de son système de prélèvement d'air du deuxième sous-système référencé 4 sur la figure 1.

La panne référencée ECS1 désigne une panne du pack de conditionnement d'air du premier sous-système référencé 6 sur la figure 1 et la panne ECS2 désigne une panne du pack de conditionnement d'air du deuxième sous-système référencé 16 sur la figure 1. La mention « sans » désigne une absence de panne.

En ce qui concerne les consommateurs d'air, AFC désigne un dispositif de contrôle actif d'écoulement de l'avion, WAI un dispositif de dégivrage de l'avion, ECS1, le premier pack de conditionnement d'air et ECS2, le deuxième pack de conditionnement d'air.

En lien avec les consommateurs d'air, la mention ON désigne que le consommateur est alimenté en air par le système ou que la source alimente le système en air. La mention OFF désigne que le consommateur n'est pas alimenté en air ou que la source ne fournit pas d'air au système.

En ce qui concerne les sources d'air et moyens de distribution, Bleed1 désigne l'air prélevé sur le moteur de propulsif du premier sous-système, Bleed2 désigne l'ai prélevé sur le moteur propulsif du deuxième sous-système, APU désigne l'air fourni par le moteur auxiliaire référencé 5 sur la figure 1, XFV désigne la vanne de mise en communication de fluide des deux sous-systèmes, et APUIV désigne la vanne d'isolation du circuit formé par la conduite 26, l'APU 5 et les packs ECS1 6 et ECS2 16 , du reste du système d'air.

En lien avec les sources d'air, la mention ON désigne que la source d'air fournit de l'air au système d'air et la mention OFF désigne que la source d'air ne fournit pas d'air au système d'air. La mention ON/OFF désigne que la source d'air peut fournir de l'air ou non sans que cela ne change sensiblement le comportement du système d'air.

En ce qui concerne les vannes, la mention OP désigne que la vanne est ouverte et permet le passage d'air. La mention CL désigne que la vanne est fermée et bloque le passage d'air. La mention OP/CL désigne que la vanne peut être ouverte ou fermée sans que cela ne modifie substantiellement la logique de distribution d'air.

| **Panne** | **Consommateurs d'air** | | | | **Sources d'air et vannes** | | | | |
|---|---|---|---|---|---|---|---|---|---|
| | AFC | WAI | ECS1 | ECS2 | Bleed1 | Bleed2 | APU | XFV | APUIV |
| Sans | OFF | OFF | ON | ON | ON | ON | OFF | OP/CL | OP |
| Sans | ON | OFF | ON | ON | ON | ON | OFF | OP | OP |
| Sans | ON | ON | ON | ON | ON | ON | OFF | OP | OP |
| Sans | OFF | ON | ON | ON | ON | ON | OFF | OP/CL | OP |
| M1 | OFF | OFF | 1 ou 2 ECS ON | | OFF | ON | OFF | OP/CL | OP |
| M1 | ON | OFF | 1 ECS ON | | OFF | ON | OFF | OP | OP |
| M1 | ON | ON | ON | OFF | OFF | ON | ON | OP | CL |
| M1 | OFF | ON | 1 ECS ON | | OFF | ON | OFF | OP | OP |
| M2 | OFF | OFF | 1 ou 2 ECS ON | | ON | OFF | OFF | OP/CL | OP |
| M2 | ON | OFF | 1 ECS ON | | ON | OFF | OFF | OP | OP |
| M2 | ON | ON | ON | OFF | ON | OFF | ON | OP | CL |
| M2 | OFF | ON | 1 ECS ON | | ON | OFF | OFF | OP | OP |
| ECS1 | OFF | OFF | OFF | ON | OFF | ON | OFF | OP/CL | OP |
| ECS1 | ON | OFF | OFF | ON | ON/OFF | ON | OFF | OP | OP |
| ECS1 | ON | ON | OFF | ON | ON | ON | OFF | OP/CL | OP |
| ECS1 | OFF | ON | OFF | ON | OFF | ON | OFF | OP/CL | OP |
| ECS2 | OFF | OFF | ON | OFF | ON | OFF | OFF | OP/CL | OP |
| ECS2 | ON | OFF | ON | OFF | ON | ON/OFF | OFF | OP | OP |
| ECS2 | ON | ON | ON | OFF | ON | ON | OFF | OP/CL | OP |
| ECS2 | OFF | ON | ON | OFF | ON | OFF | OFF | OP/CL | OP |

On constate à la lecture du tableau ci-dessus que le système d'air permet de maintenir le dispositif AFC opérationnel même lors de la perte d'un moteur propulsif ou de son système de prélèvement d'air (panne M1 ou M2).

Il est notamment possible de relier fluidiquement les deux sous-systèmes en ouvrant la vanne XFV lors de l'alimentation des dispositifs AFC et d'équilibrer les débits d'air entre les deux dispositifs de prélèvement moteur.

De plus, le système permet, grâce à la vanne APUIV d'assurer une continuité d'alimentation en air des dispositifs AFC, y compris pendant la période transitoire de reconfiguration du système d'air. En effet, le pack de conditionnement d'air est alors alimenté par le groupe auxiliaire de puissance et le dispositif de prélèvement d'air du moteur actif alimente les consommateurs d'air critiques, le temps de reconfiguration du système d'air.

Un système selon l'invention permet d'isoler les packs de conditionnement d'air en fermant la vanne APUIV et d'utiliser simultanément toutes les sources d'air disponibles.

Il est connu qu'un groupe auxiliaire ne fournit pas d'air au-delà d'une certaine altitude. Cela étant, le tableau ci-dessus couvre toutes les configurations possibles de panne et de disponibilités des sources car le système WAIS n'est pas nécessaire au-delà d'une certaine altitude (31 000 pieds pour l'airbus A320^{®}) et le besoin d'activer le dispositif AFC (dans le cas d'un dispositif agencé sur la jonction aile pylône) est limité aux phases d'atterrissage et de décollage jusqu'à une altitude estimée à 22 000 pieds.

Un système selon le mode de réalisation de la figure 1 permet également d'alimenter simultanément le WAIS des deux côtés de l'aéronef et le système de conditionnement d'air avec un seul dispositif de prélèvement d'air.

Le système selon le mode de réalisation de la figure 1 permet donc de contrôler et d'alimenter un ou plusieurs dispositifs d'écoulement actif simultanément aux autres consommateurs d'air déjà présents sur un aéronef, y compris lors des pannes les plus courantes, sans nécessiter une augmentation des débits de prélèvement d'air ou des sources d'air.

La présence de la vanne APUIV permet de disposer d'un coup d'avance sur la panne suivante du système d'air, en autorisant différentes reconfigurations selon les conditions de vol, les besoins en air et les disponibilités des sources d'air.

Dans les configurations proposées, la survenue d'une panne n'interrompt pas le fonctionnement du dispositif AFC qui est connecté en permanence à une source d'air débitante.

La figure 1 illustre un système d'air selon un mode de réalisation de l'invention dans lequel des dispositifs AFC sont ajoutés à un système d'air classique.

Selon une variante non représentée, le système d'air peut aussi être dénué de dispositifs AFC, mais tout en mettant en œuvre la même architecture pour permettre, par exemple, deux niveaux de régulation de température des dispositifs WAIS ou une alimentation d'un autre consommateur d'air avec un débit d'air supérieur selon les conditions de vol.

## Revendications

1. Système d'air d'un aéronef comprenant :
- une pluralité de consommateurs d'air dont au moins un pack de conditionnement d'air (6, 16) destiné à alimenter une cabine de l'aéronef en air à température et pression contrôlées,
- une pluralité de sources d'air dont au moins un dispositif de prélèvement d'air sur un moteur propulsif (3, 4) de l'aéronef et au moins un groupe auxiliaire de puissance (5),
- un réseau de conduites (23, 25, 26, 28) et de vannes de régulation (PRV, OPV, APUCV, IPCV, FAV) configurées pour pouvoir, sur commande d'une unité de commande (14) et/ou en fonction des conditions de vol, assurer une liaison fluidique entre lesdites sources d'air et lesdits consommateurs d'air.
- ledit réseau de conduites et de vannes associées comprenant au moins une vanne, dite vanne d'isolation (APUIV), agencée entre un dispositif de prélèvement d'air et une conduite d'air (26) reliant un pack de conditionnement d'air (6) et ledit groupe auxiliaire de puissance (5),
- ladite unité de commande (14) étant configuré pour pouvoir déterminer, à partir des besoins en air de chaque consommateur d'air et des sources d'air disponibles, une configuration des vannes de régulation (PRV, OPV, APUCV, IPCV, FAV, APUIV), dite configuration idéale, qui permet d'alimenter en air chaque consommateur d'air suivant lesdits besoins identifiés, et une configuration, dite configuration dégradée, qui permet d'alimenter en air des consommateurs d'air prédéterminés à partir desdites sources d'air disponibles lorsque ladite configuration idéale n'est pas atteignable.

2. Système d'air selon la revendication 1, **caractérisé en ce que** ladite pluralité de consommateurs d'air comprend au moins un dispositif de contrôle actif d'écoulement (17, 18) monté sur l'aéronef pour améliorer le comportement aérodynamique de l'aéronef et agencé en aval d'une vanne de régulation (AFCV) pilotée par ladite unité de commande (14).

3. Système d'air selon la revendication 2, **caractérisé en ce qu'**au moins un dispositif de contrôle actif d'écoulement (17, 18) et sa vanne associée (AFCV) sont agencés immédiatement en aval d'un dispositif de prélèvement d'air de manière à pouvoir être alimentés par un air chaud à température contrôlée issu directement de ce dispositif de prélèvement d'air.

4. Système d'air selon l'une des revendications 2 ou 3, **caractérisé en ce qu'**il comprend en outre des moyens de surveillance de l'alimentation en air de chaque dispositif de contrôle actif d'écoulement (17, 18).

5. Système d'air selon l'une des revendications 2 à 4, **caractérisé en ce qu'**au moins un dispositif de contrôle d'écoulement actif (17, 18) est agencé sur chaque aile de l'aéronef et **en ce que** ladite unité de commande est configurée pour commander l'alimentation en air de chaque dispositif d'écoulement actif uniquement pendant les phases de décollage et d'atterrissage.

6. Système d'air selon l'une des revendications 1 à 5, **caractérisé en ce qu'**il comprend deux dispositifs de prélèvement d'air agencés respectivement sur deux moteurs propulsifs (3, 4) distincts agencés sur chaque côté de l'aéronef et **en ce qu'**il comprend une vanne, dite vanne d'interconnexion (XFV), agencée entre les deux dispositifs de prélèvement d'air de manière à permettre à un seul des deux dispositifs de prélèvement d'air d'alimenter les deux côtés de l'aéronef en cas de panne de l'autre dispositif de prélèvement d'air.

7. Système d'air selon l'une des revendication 1 à 6, **caractérisé en ce qu'**il comprend en outre au moins un dispositif de dégivrage des ailes de l'aéronef agencé en aval d'au moins un dispositif d'écoulement actif.

8. Procédé de gestion d'air au sein d'un aéronef comprenant au moins une pluralité de consommateurs d'air dont au moins un pack de conditionnement d'air (6, 16) et une pluralité de sources d'air dont au moins un dispositif de prélèvement d'air sur un moteur propulsif de l'aéronef (3, 4) et au moins un groupe auxiliaire de puissance (5), une unité de commande (14), un réseau de conduites et de vannes de régulation (PRV, OPV, APUCV, IPCV, FAV) configuré pour permettre sur commande de ladite unité de commande (14) de relier fluidiquement lesdites sources d'air auxdits consommateurs d'air, **caractérisé en ce qu'**il comprend les étapes consistant à :
- déterminer les besoins en air de chaque consommateur d'air et lesdites sources d'air disponibles,
- déterminer une configuration, dite configuration idéale, qui permet d'alimenter en air, sur commande desdites vannes de régulation par ladite unité de commande, chaque consommateur d'air suivant lesdits besoins identifiés,
- déterminer une configuration, dite configuration dégradée, qui permet d'alimenter en air, sur commande desdites vannes de régulation par ladite unité de commande, des consommateurs d'air prédéterminés à partir desdites sources d'air disponibles lorsque ladite configuration idéale n'est pas atteignable.

## Patentansprüche

1. Belüftungssystem für ein Flugzeug, welches umfasst:
- mehrere Luftverbraucher, darunter mindestens ein Klimagerät (6, 16), das dazu bestimmt ist, eine Flugzeugkabine mit Luft mit kontrollierter Temperatur und kontrolliertem Druck zu versorgen,
- mehrere Luftquellen, darunter mindestens eine Luftentnahmeeinrichtung an einem Triebwerk (3, 4) des Flugzeugs und mindestens ein Hilfsaggregat (5),
- ein Leitungsnetz (23, 25, 26, 28) und Steuerventile (PRV, OPV, APUCV, IPCV, FAV), die ausgestaltet sind, auf Befehl einer Steuereinheit (14) und/oder in Abhängigkeit von Flugbedingungen eine Fluidverbindung zwischen den Luftquellen und den Luftverbrauchern herstellen zu können,
- wobei das Leitungsnetz mit den zugehörigen Ventile mindestens ein Ventil, ein sogenanntes Absperrventil (APUIV), umfasst, das zwischen einer Luftentnahmeeinrichtung und einer Luftleitung (26) angeordnet ist, die ein Klimagerät (6) und das Hilfsaggregat (5) verbindet,
- worin die Steuereinheit (14) ausgestaltet ist, ausgehend von den Luftanforderungen jedes Luftverbrauchers und den verfügbaren Luftquellen eine Konfiguration der Steuerventile (PRV, OPV, APUCV, IPCV, FAV, APUIV), die als ideale Konfiguration bezeichnet wird, die es ermöglicht, jeden Luftverbraucher gemäß den identifizierten Anforderungen mit Luft zu versorgen, und eine Konfiguration, die als verschlechterte Konfiguration bezeichnet wird, zu bestimmen, die es ermöglicht, bestimmte Luftverbraucher ausgehend von den verfügbaren Luftquellen mit Luft zu versorgen, wenn die ideale Konfiguration nicht erreicht werden kann.

2. Belüftungssystem nach Anspruch 1, **dadurch gekennzeichnet, dass** die mehreren Luftverbraucher mindestens eine aktive Strömungssteuerungseinrichtung (17, 18) umfasst, die zur Verbesserung des aerodynamischen Verhaltens des Flugzeugs am Flugzeug angebracht und stromabwärts eines von der Steuereinheit (14) gesteuerten Steuerventils (AFCV) angeordnet ist.

3. Belüftungssystem nach Anspruch 2, **dadurch gekennzeichnet, dass** mindestens eine aktive Strömungssteuerungseinrichtung (17, 18) und das zugehörige Ventil (AFCV) unmittelbar stromabwärts einer Luftentnahmeeinrichtung angeordnet sind, so dass Warmluft mit einer geregelten Temperatur direkt von dieser Luftentnahmeeinrichtung zugeführt werden kann.

4. Belüftungssystem nach einem der Ansprüche 2 oder 3, **dadurch gekennzeichnet, dass** es ferner Mittel zur Überwachung der Luftzufuhr zu jeder aktiven Strömungssteuerungseinrichtung (17, 18) umfasst.

5. Belüftungssystem nach einem der Ansprüche 2 bis 4, **dadurch gekennzeichnet, dass** mindestens eine aktive Strömungssteuerungseinrichtung (17, 18) an jedem Flügel des Flugzeugs angeordnet ist und dass die Steuereinheit ausgestaltet ist, die Luftzufuhr zu jeder aktiven Strömungsvorrichtung nur während der Start- und Landephasen zu steuern.

6. Belüftungssystem nach einem der Ansprüche 1 bis 5, **dadurch gekennzeichnet, dass** es zwei Luftentnahmeeinrichtungen umfasst, die an zwei getrennten Triebwerken (3, 4) entsprechend angeordnet sind, die auf jeder Seite des Flugzeugs angeordnet sind, und dass es ein als Verbindungsventil (XFV) bezeichnetes Ventil umfasst, das zwischen den beiden Luftentnahmeeinrichtungen angeordnet ist, so dass nur eine der beiden Luftentnahmeeinrichtungen die beiden Seiten des Flugzeugs versorgen kann, wenn die andere Luftentnahmeeinrichtung ausfällt.

7. Belüftungssystem nach einem der Ansprüche 1 bis 6, **dadurch gekennzeichnet, dass** es ferner mindestens eine Vorrichtung zur Enteisung der Tragflächen des Flugzeugs umfasst, die stromabwärts von mindestens einer aktiven Strömungsvorrichtung angeordnet ist.

8. Verfahren zum Belüftungsmanagement in einem Flugzeug mit mindestens mehreren Luftverbrauchern, darunter mindestens ein Klimagerät (6, 16), und mehrere Luftquellen, darunter mindestens eine Luftentnahmeeinrichtung an einem Triebwerk des Flugzeugs (3, 4) und mit mindestens einem Hilfsaggregat (5), einer Steuereinheit (14), und einem Leitungsnetz mit Steuerventilen (PRV, OPV, APUCV, IPCV, FAV), die ausgestaltet sind, die Luftquellen auf Befehl der Steuereinheit (14) mit den Luftverbrauchern strömungsmäßig zu verbinden, **dadurch gekennzeichnet, dass** das Verfahren die Schritte umfasst:
- Bestimmung des Luftbedarfs jedes Luftverbrauchers und der verfügbaren Luftquellen,
- Bestimmen einer Konfiguration, der sogenannten idealen Konfiguration, die es ermöglicht, auf Befehl der Steuerventile durch die Steuereinheit jedem Luftverbraucher entsprechend den ermittelten Anforderungen Luft zuzuführen,
- Bestimmen einer Konfiguration, die als verschlechterte Konfiguration bezeichnet wird, die es ermöglicht, auf Befehl der Steuerventile durch die Steuereinheit Luft an bestimmte Luftverbraucher aus den verfügbaren Luftquellen zu liefern, wenn die ideale Konfiguration nicht erreichbar ist.

## Claims

1. Air system for an aircraft, comprising:
- a plurality of air consumers including at least one air conditioning pack (6, 16) intended to supply an aircraft cabin with air at controlled temperature and pressure,
- a plurality of air sources including at least one air bleed device on a propulsion engine (3, 4) of the aircraft and at least one auxiliary power unit (5),
- a network of ducts (23, 25, 26, 28) and control valves (PRV, OPV, APUCV, IPCV, FAV) configured to be able, on command from a control unit (14) and/or according to flight conditions, to provide a fluid connection between said air sources and said air consumers,
- said network of ducts and associated valves comprising at least one valve, called an isolation valve (APUIV), arranged between an air bleed device and an air duct (26) connecting an air conditioning pack (6) and said auxiliary power unit (5),
- said control unit (14) being configured to be able to determine, from the air requirements of each air consumer and the available air sources, a configuration of the control valves (PRV, OPV, APUCV, IPCV, FAV, APUIV), called the ideal configuration, that makes it possible to supply each air consumer with air according to the identified requirements, and a configuration, called the degraded configuration, that makes it possible to supply air to predetermined air consumers from said available air sources when said ideal configuration is not attainable.

2. Air system according to claim 1, **characterized in that** said plurality of air consumers comprises at least one active flow control device (17, 18) mounted on the aircraft to improve the aerodynamic behavior of the aircraft and arranged downstream of a control valve (AFCV) controlled by said control unit (14).

3. Air system according to claim 2, **characterized in that** at least one active flow control device (17, 18) and its associated valve (AFCV) are arranged immediately downstream of an air bleed device so as to be able to be supplied with hot air at a controlled temperature directly from this air bleed device.

4. Air system according to one of claims 2 or 3, **characterized in that** it further comprises means for monitoring the air supply to each active flow control device (17, 18).

5. Air system according to one of claims 2 to 4, **characterized in that** at least one active flow control device (17, 18) is arranged on each wing of the aircraft and **in that** said control unit is configured to control the air supply to each active flow device only during the take-off and landing phases.

6. Air system according to one of claims 1 to 5, **characterized in that** it comprises two air bleed devices arranged respectively on two separate propulsion engines (3, 4) arranged on each side of the aircraft and **in that** it comprises a valve, called an interconnect valve (XFV), arranged between the two air bleed devices so as to allow only one of the two air bleed devices to supply both sides of the aircraft in the event that the other air bleed device fails.

7. Air system according to one of claims 1 to 6, **characterized in that** it further comprises at least one device for de-icing the wings of the aircraft arranged downstream of at least one active flow device.

8. Method for managing air within an aircraft comprising at least a plurality of air consumers including at least one air conditioning pack (6, 16) and a plurality of air sources including at least one air bleed device on a propulsion engine of the aircraft (3, 4) and at least one auxiliary power unit (5), a control unit (14), a network of ducts and control valves (PRV, OPV, APUCV, IPCV, FAV) configured to allow said air sources to be fluidly connected to said air consumers on command from said control unit (14), **characterized in that** said method comprises the steps of:
- determining the air requirements of each air consumer and the available air sources,
- determining a configuration, called the ideal configuration, that makes it possible to supply air, on command from said control valves by said control unit, to each air consumer according to the identified requirements,
- determining a configuration, called the degraded configuration, that makes it possible to supply air, on command from said control valves by said control unit, to predetermined air consumers from said available air sources when said ideal configuration is not attainable.
